# EUROPEAN PATENT SPECIFICATION

(11) **EP 3 500 971 B1**
(45) Date of publication and mention of the grant of the patent: **25.12.2019**
(21) Application number: 16779237.3
(22) Date of filing: 22.09.2016
(51) Int. Cl.: G06F 21/62, H04L 29/06

(54) **DATA DISTURBANCE DEVICE AND DATA DISTURBANCE SYSTEM**
DATENSTÖRUNGSVORRICHTUNG UND DATENSTÖRUNGSSYSTEM
DISPOSITIF ET SYSTÈME DE PERTURBATION DE DONNÉES

(43) Date of publication of application: 26.06.2019
(73) Proprietor: Mitsubishi Electric Corporation, Chiyoda-ku Tokyo 100-8310 (JP)
(72) Inventor: HATTORI, Mitsuhiro, Tokyo 100-8310 (JP); SHIMIZU, Rina, Tokyo 100-8310 (JP); HIRANO, Takato, Tokyo 100-8310 (JP); MATSUDA, Nori, Tokyo 100-8310 (JP); WANG, Ye, Cambridge, Massachusetts 02139 (US)
(74) Representative: Pfenning, Meinig & Partner mbB
(86) International application number: PCT/US2016/053066
(87) International publication number: WO 2018/056980

(56) References cited:
- US-A1- 2016 203 333
- SALAMATIAN SALMAN ET AL: "How to hide the elephant- or the donkey- in the room: Practical privacy against statistical inference for large data", 2013 IEEE GLOBAL CONFERENCE ON SIGNAL AND INFORMATION PROCESSING, IEEE, 3 December 2013 (2013-12-03), pages 269-272, XP032566685, DOI: 10.1109/GLOBALSIP.2013.6736867 [retrieved on 2014-02-10]

## Description

### Technical Field

The present invention relates to a data disturbance device that disturbs and outputs the acquired data, and a data disturbance system that uses the data disturbance device.

### Background Art

The recent development of IoT (Internet of Things) technologies has been allowing companies to collect and analyze detailed, vast amounts of data. Particularly, there have been increasing cases where companies collect and analyze data relating to individuals, which is so-called personal data, provide feedback about the results of the analyses to the individuals concerning the personal data, and utilize internally the personal data to improve the services or to develop new products.

Since personal data possibly contain information concerning privacy of each individual, various techniques for privacy protection have been proposed.

Patent application US2016203333 A1 and publication SALAMATIAN SALMAN ET AL: "How to hide the elephant- or the donkey- in the room: Practical privacy against statistical inference for large data",2013 IEEE GLOBAL CONFERENCE ON SIGNAL AND INFORMATION PROCESSING, IEEE, 3 December 2013 (2013-12-03), pages 269-272,DOI: 10.1109/GLOBALSIP.2013.6736867 disclose teachings related to the field of the invention.

PTL 1, for example, discloses a method for protecting privacy by de-identifying personal information using a technique called "k-anonymization" which prevents identification of a certain number of individuals or more by generalizing attribute values of the personal information.

PTL 2, on the other hand, discloses a method for protecting privacy through de-identification of personal information by disturbing data by means of a wavelet transform in order to meet the safety standards called "differential privacy" which prevents one from distinguishing whether or not specific personal information is contained in a large volume of personal information.

PTL 3 discloses a method for protecting privacy by processing power data by using a signal generator and a battery so as to maximize the Kullback-Leibler divergences in distributions of unprocessed and processed power data while keeping statistical information such as average values and variance values with respect to power data acquired with a smart meter.

### Citation List

### Patent Literature

[PTL 1] WO 2011/145401
[PTL 2] Japanese Patent Application Publication No. 2016-12074
[PTL 3] Japanese Patent Application Publication No. 2013-153424

### Summary of Invention

### Technical Problem

However, the k-anonymization technique and the differential privacy technique disclosed in PTL 1 and PTL 2 generalize data more than necessary, degrading data usability. In addition, these techniques cannot protect privacy according to the needs of each individual, despite the fact that each person defines privacy differently.

The privacy protection technique disclosed in PTL 3 also faces such problems as degrading of data usability and not being able to protect privacy according to the needs of each individual.

The present invention was contrived in order to solve the foregoing problems, and an object thereof is to provide a data disturbance device capable of protecting privacy according to the needs of each individual while maintaining data usability.

### Solution to Problem

The invention is defined by the appended independent claims.

### Advantageous Effects of Invention

According to the data disturbance device of the present invention, the disturbance object setting unit calculates a disturbance parameter necessary to disturb the information, which is set as information to be disturbed, out of items of information contained in the acquired data, and the data disturbance unit generates disturbed data by irreversibly converting the acquired data using the disturbance parameter.

Therefore, the data disturbance device can protect privacy according to the needs of each individual while maintaining data usability.

### Brief Description of Drawings

[Fig. 1] Fig. 1 is a block configuration diagram showing a data disturbance system according to Embodiment 1 of the present invention.
[Fig. 2] Fig. 2 is a block diagram showing a functional composition of each device of the data disturbance system according to Embodiment 1 of the present invention.
[Fig. 3] Fig. 3 is a block diagram showing a hardware configuration of each device of the data disturbance system according to Embodiment 1 of the present invention.
[Fig. 4] Fig. 4 is a flowchart showing a procedure for enabling a data provider to set information to be disturbed out of items of information contained in raw data by using a data disturbance device of the data disturbance system according to Embodiment 1 of the present invention.
[Fig. 5A] Fig. 5A is an explanatory diagram showing an extraction parameter obtained through the procedure shown in Fig. 4.
[Fig. 5B] Fig. 5B is an explanatory diagram showing a disturbance parameter obtained through the procedure shown in Fig. 4.
[Fig. 6] Fig. 6 is a flowchart showing a procedure for generating processed data by disturbing the raw data by using the data disturbance device of the data disturbance system according to Embodiment 1 of the present invention.
[Fig. 7] Fig. 7 is a block configuration diagram showing a data disturbance system according to Embodiment 2 of the present invention.
[Fig. 8] Fig. 8 is a flowchart showing a procedure for enabling a data provider to set information to be disturbed out of items of information contained in raw data by using a data disturbance device of the data disturbance system according to Embodiment 2 of the present invention.
[Fig. 9A] Fig. 9A is an explanatory diagram showing a first disturbance parameter obtained through the procedure shown in Fig. 8.
[Fig. 9B] Fig. 9B is an explanatory diagram showing a second disturbance parameter obtained through the procedure shown in Fig. 8.

### Description of Embodiments

Preferred embodiments of a data disturbance device according to the present invention are now described hereinafter using the diagrams, wherein the same reference numerals are used to describe the identical or corresponding parts in each diagram.

### Embodiment 1

Embodiment 1 describes a technique concerning a system consisting of two members, a data provider and a data user, as in a smart meter system, a HEMS (Home Energy Management System) and the like, the technique for enabling a data user to perform effective data analysis while protecting privacy information of a data provider contained in data.

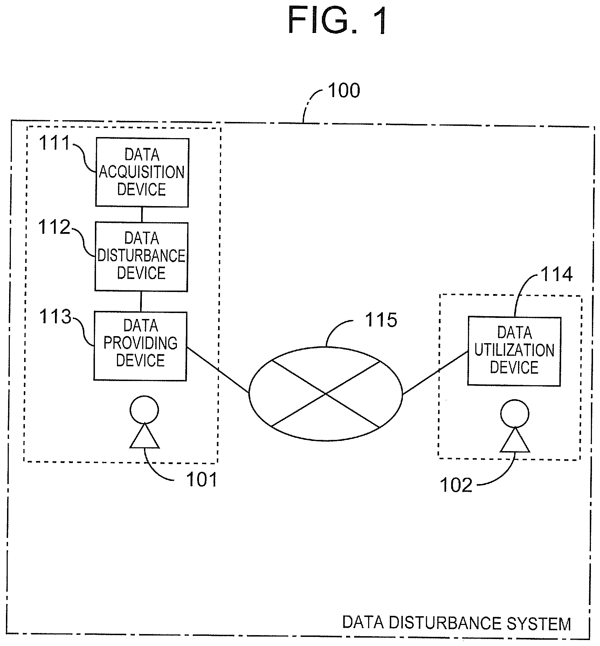

Fig. 1 is a block configuration diagram showing a data disturbance system according to Embodiment 1 of the present invention. In Fig. 1, a data provider 101 is a person who provides data stored in a data disturbance system 100, and a data user 102 is a person who uses the data stored in the data disturbance system 100.

The data provider 101 is provided with a data acquisition device 111, a data disturbance device 112, and a data providing device 113. The data user 102 is provided with a data utilization device 114. The data providing device 113 and the data utilization device 114 are connected to each other by a network 115.

The data acquisition device 111 is a device for acquiring data. The data disturbance device 112 is a device for disturbing the acquired data by means of a method described hereinafter. The acquired data are referred to as "raw data" hereinafter.

The data providing device 113 is a device for providing disturbed data from the data provider 101 to the data user 102. The disturbed data are referred to as "processed data" hereinafter. The data utilization device 114 is a device for utilizing the processed data provided from the data provider 101.

In a smart meter system, for example, the data provider 101 is the head of a household, and the data user 102 is a power company. The data acquisition device 111 is a power sensor. The data disturbance device 112 is a personal computer or a dedicated device.

The data providing device 113 is a personal computer or a broadband router. The network 115 is the Internet. The data utilization device 114 is a personal computer or a main frame.

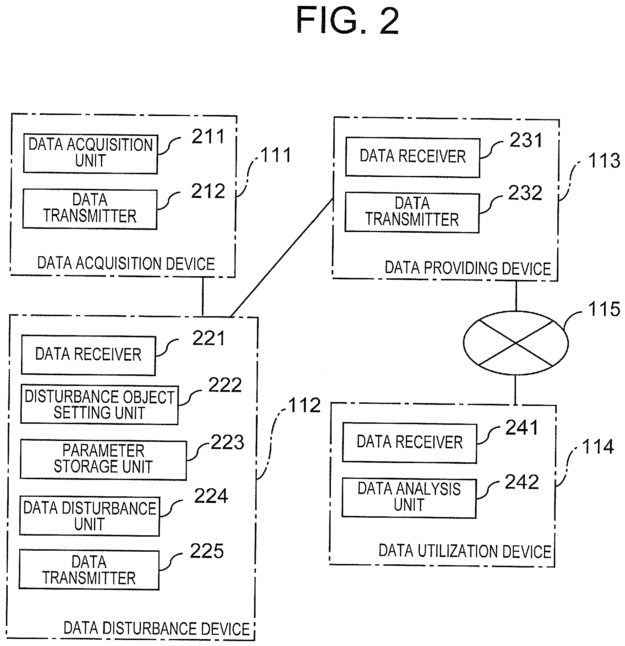

Fig. 2 is a block diagram showing a functional composition of each device of the data disturbance system according to Embodiment 1 of the present invention. As shown in Fig. 2, the data acquisition device 111 is configured with a data acquisition unit 211 for acquiring data and a data transmitter 212 for transmitting acquired data to the data disturbance device 112.

The data disturbance device 112 is configured with a data receiver 221 for receiving raw data from the data acquisition device 111, a disturbance object setting unit 222 for enabling the data provider 101 to set information to be disturbed out of items of information contained in the raw data, a parameter storage unit 223 for storing a parameter used for disturbance, a data disturbance unit 224 for actually disturbing the raw data, and a data transmitter 225 for transmitting processed data to the data providing device 113.

The data providing device 113 is configured with a data receiver 231 for receiving processed data from the data disturbance device 112, and a data transmitter 232 for transmitting the processed data to the network 115.

The data utilization device 114 is configured with a data receiver 241 for receiving processed data from the network 115, and a data analysis unit 242 for performing a variety of analyses on the received processed data.

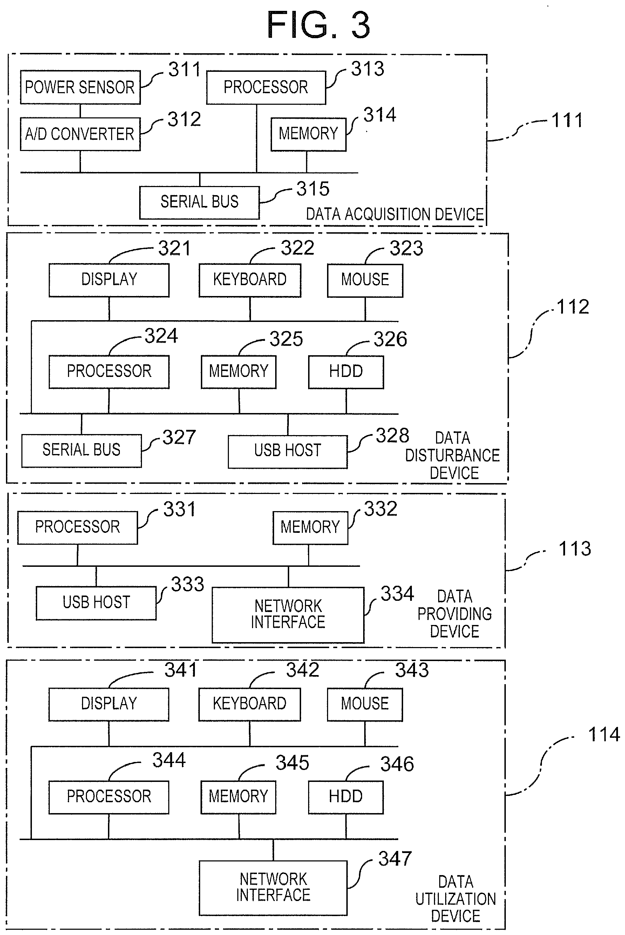

Fig. 3 is a block diagram showing a hardware configuration of each device of the data disturbance system according to Embodiment 1 of the present invention. As shown in Fig. 3, the data acquisition device 111 is configured with a power sensor 311, an A/D converter 312, a processor 313, and a memory 314 that realize mainly the functions of the data acquisition unit 211, and a serial bus 315 for realizing mainly the functions of the data transmitter 212.

The data disturbance device 112 is configured with a serial bus 327 for realizing mainly the functions of the data receiver 221, a display 321, a keyboard 322, and a mouse 323 that realize mainly the functions of the disturbance object setting unit 222, an HDD 326 for realizing mainly the functions of the parameter storage unit 223, a processor 324 and a memory 325 that realize mainly the functions of the data disturbance unit 224, and a USB host 328 for realizing mainly the functions of the data transmitter 225.

The data providing device 113 is configured with a processor 331, a memory 332, and a USB host 333 that realize mainly the functions of the data receiver 231, and a network interface 334 for realizing mainly the functions of the data transmitter 232.

The data utilization device 114 is configured with a network interface 347 for realizing mainly the functions of the data receiver 241, and a display 341, a keyboard 342, a mouse 343, a processor 344, a memory 345, and an HDD 346 that realize mainly the functions of the data analysis unit 242.

The relationship between the functional composition shown in Fig. 2 and the hardware configuration shown in Fig. 3 is now further described. In the data acquisition device 111 shown in Figs. 2 and 3, the data acquisition unit 211 converts analog power data measured by the power sensor 311 into digital power data by means of the A/D converter 312, and then stores the digital power data in the memory 314.

The data transmitter 212 reads the power data from the memory 314 and transmits the read power data to the data disturbance device 112 through the serial bus 315. This series of operations is performed through the execution of a program by the processor 313.

In the data disturbance device 112 shown in Figs. 2 and 3, the data receiver 221 receives raw data from the data acquisition device 111 through the serial bus 327, and then stores the received raw data in the memory 325. The disturbance object setting unit 222 first displays a disturbance object on the display 321. The disturbance object setting unit 222 also calculates a parameter necessary for disturbance, based on a setting entered by the data provider 101 using the keyboard 322 or mouse 323, and stores the parameter in the HDD 326 which is the parameter storage unit 223.

The data disturbance unit 224 first reads the parameter from the HDD 326 which is the parameter storage unit 223, disturbs the raw data stored in the memory 325 to generate processed data based on this parameter, and stores the processed data in the memory 325. The data transmitter 225 reads the processed data from the memory 325 and transmits the processed data to the data providing device 113 through the USB host 328. This series of operations is performed through the execution of a program by the processor 324.

In the data providing device 113 shown in Figs. 2 and 3, the data receiver 231 receives the processed data from the data disturbance device 112 through the USB host 333 and then stores the received processed data in the memory 332. The data transmitter 232 reads the processed data from the memory 332 and transmits the read processed data to the network 115 through the network interface 334. This series of operations is performed through the execution of a program by the processor 331.

In the data utilization device 114 shown in Figs. 2 and 3, the data receiver 241 receives the processed data from the data providing device 113 through the network interface 347, and then stores the received processed data in the memory 345 or HDD 346. The data analysis unit 242 reads the processed data from the memory 345 or HDD 346 and displays the read processed data on the display 341.

The data analysis unit 242 executes analysis on the memory 345 in accordance with the analysis details that are input by the data user 102 using the keyboard 322 or mouse 343, and then displays the result of the analysis on the display 341. This series of operations is performed through the execution of a program by the processor 344.

Fig. 3 shows an example of the data acquisition device 111 relating to the power data. However, those skilled in the art can easily understand that a data acquisition device with the same functions can be configured even when different types of data are used.

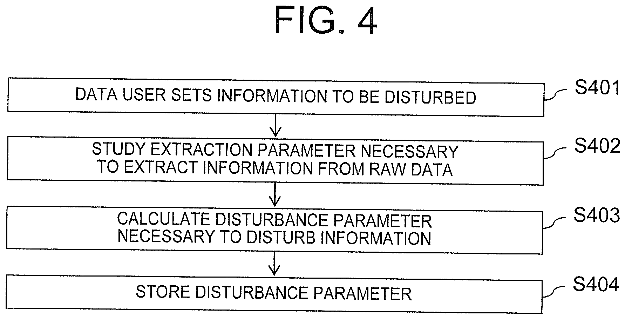

Operations of the data disturbance system having the foregoing configuration are described next. First of all, a method for enabling the data provider 101 to set information to be disturbed out of items of information contained in raw data by using the data disturbance device 112 is described with reference to Fig. 4.

Fig. 4 is a flowchart showing a procedure for enabling the data provider to set information to be disturbed out of items of information contained in raw data by using the data disturbance device of the data disturbance system according to Embodiment 1 of the present invention.

As shown in Fig. 4, the data provider 101 first sets the information to be disturbed (step S401). In so doing, for example, the data provider 101 can select the information to be disturbed from among the information candidates displayed on the display 321. More specifically, from a list of household electrical appliances, the data provider 101 can select an appliance that is considered to conflict with privacy, such as a bathroom light.

Next, an extraction parameter necessary to extract information from the raw data is studied (step S402). This step is realized by a method known in the pattern recognition field and the machine learning field.

More specifically, when a hidden Markov model is used to extract the operation history of each household electrical appliance from the power data, the foregoing step is realized by studying a transition probability or an output distribution, which is a parameter necessary to extract the operation history of each household electrical appliance, by using a part of an EM (Expectation-Maximization) algorithm. Note that the operation history is a history of operations of each household electrical appliance that show, for example, that the bathroom light was turned ON at 6:10, that the bathroom light was turned OFF at 6:12, and that the rice cooker was set to "warm" at 7:34, and the like.

Next, a disturbance parameter necessary to disturb the information is calculated (step S403). This step is realized by solving a convex optimization problem. More specifically, this step is carried out as follows.

The information to be disturbed, which is the operating status of a specific household electrical appliance selected by the data provider 101, such as the ON/OFF state of the bathroom light, is taken as a random variable X, data such as power data is taken as a random variable Y, and processed data such as disturbed power data is taken as a random variable Z.

In this case, a convex optimization problem is known as a problem of obtaining a conditional probability P_{Z}|_{Y} that minimizes the amount of mutual information I(X;Z) between the X and the Z, under the condition according to which the expected value of the distance between the Y and the Z is set to be less than a predetermined value, namely under the condition according to which an expected value E of the Euclidean distance [||Y-Z||] is less than d ([||Y-Z||] < d).

The disturbance parameter P_{Z}|_{Y} is calculated by solving this problem. Note that a more detailed method was invented by the same inventor as the inventor of the present invention and described in U.S. Patent Application No. 15/224,742 filed in the U.S. on August 1, 2016.

Next, the disturbance parameter is stored (step S404), ending the procedure shown in Fig. 4.

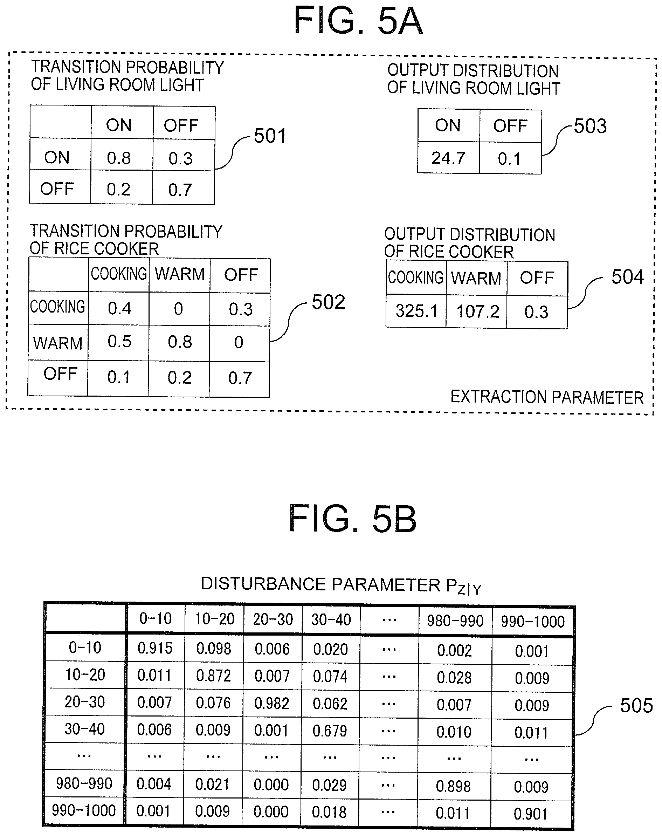

Fig. 5A is an explanatory diagram showing the extraction parameter obtained through the procedure shown in Fig. 4. Fig. 5A illustrates a transition probability 501 of a living room light, a transition probability 502 of the rice cooker, an output distribution 503 of the living room light, and an output distribution 504 of the rice cooker.

In each of the tables of transition probabilities, the row shows the current statuses, the column shows the next statuses, and the values represent the transition probabilities. For example, in the transition probability 501 of the living room light, when the current status thereof is ON, the next status of the same also becomes ON with the probability of 0.8, and the next status of the same becomes OFF with the probability of 0.2.

Each of the tables of output distributions shows statuses and power values corresponding thereto. For example, the output distribution 504 of the rice cooker shows that the power value corresponding to the "cooking" status is 325.1 watts, that the power value corresponding to the "warm" status is 107.2 watts, and that the power value corresponding to the "OFF" status is 0.3 watts.

Fig. 5B is an explanatory diagram showing a disturbance parameter obtained through the procedure shown in Fig. 4. Fig. 5B illustrates a disturbance parameter P_{Z}|_{Y} 505. The row of the table shows the raw data Y, the column shows the processed data Z, and the values each show the conditional probability P_{Z|Y}.

In Fig. 5B, for the raw data corresponding to "0 to 10 watts," for example, "0 to 10 watts" is also selected as processed data with the probability of 0.915, and "10 to 20 watts" is selected as processed data with the probability of 0.011.

For ease of explanation, this embodiment assumes that the power data that are continuous values are quantized appropriately beforehand so as to be treated as discrete values such as "0 to 10 watts."

Those skilled in the art can easily understand that even when the power data are to be treated as discrete values without being quantized, the power data can be processed in the same manner by appropriately setting a probability setting functions corresponding to the conditional probabilities P_{Z|Y}.

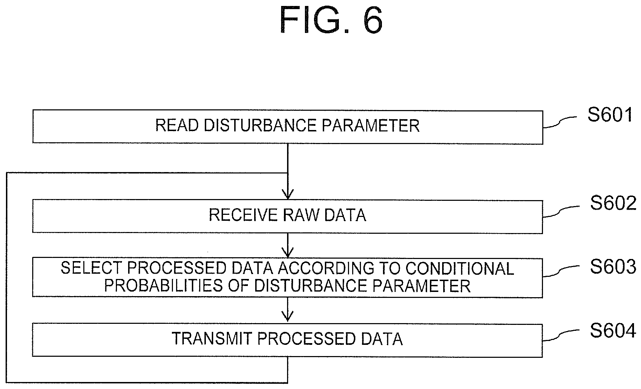

Next, a method for disturbing the raw data to generate processed data by using the data disturbance device 112 is described with reference to Fig. 6. Fig. 6 is a flowchart showing a procedure for disturbing the raw data to generate processed data by using the data disturbance device of the data disturbance system according to Embodiment 1 of the present invention.

As shown in Fig. 6, first, the disturbance parameter is read from the parameter storage unit 223 (step S601). Subsequently, the raw data is received by the data receiver 221 (step S602).

Next, processed data corresponding to the raw data are selected in accordance with the conditional probabilities of the disturbance parameter (step S603). More specifically, this step is carried out as follows.

For example, in a case where the received data is 29 watts, as shown by the conditional probabilities of the disturbance parameter in Fig. 5B, the probabilities, with which processed data are created, are 0.006 for "0 to 10 watts," 0.007 for "10 to 20 watts", 0.982 for "20 to 30 watts," and 0 for "980 watts" or higher.

Then, the processed data is selected according to these conditional probabilities. In this case, the processed data is "20 to 30 watts" with an extremely high probability and, in some cases, "10 to 20 watts" and the like.

Next, the processed data is transmitted from the data transmitter 225 (step S604). The process from step S602 to step S604 is executed on each received data, but the whole process shown in Fig. 6 is ended when no more data are received.

A more detailed method of step S603 was invented by the same inventor as the inventor of the present invention and described in U.S. Patent Application No. 15/224,742 filed in the U.S. on August 1, 2016.

It should be noted that such processing is so-called irreversible conversion. In other words, it is impossible to completely restore the raw data from the processed data. Such irreversible conversion helps reduce the amount of mutual information between the processed data and the information to be disturbed.

On the other hand, in so-called invertible transformation for generating processed data by adding a random number to the raw data, the amount of mutual information between the processed data and the information to be disturbed cannot be minimized because the information of the raw data remain as-is in the processed data.

As explained in the above, one of the main points of the present invention is to generate processed data by performing irreversible conversion on the raw data.

A disturbance parameter used in irreversible conversion is a conditional probability that is obtained by solving the convex optimization problem mentioned above. Therefore, under a given condition, minimization of the amount of mutual information between the processed data and the information to be disturbed can be guaranteed.

Meanwhile, technologies such as k-anonymization and differential privacy that de-identify personal information can quantitatively control personal specificity but cannot quantitatively control the amount of information about the information to be disturbed, which is privacy information.

As explained in the above, being able to quantitatively control the amount of information about the information to be disturbed is another main point of the present invention.

A method for transmitting the processed data to the network 115 using the data providing device 113 and a method for receiving the processed data from the network 115 using the data utilization device 114 and analyzing the received processed data, are executed by means of known network technique and data analysis technique; thus, descriptions thereof are omitted herein.

The operations according to Embodiment 1 have been described above. According to Embodiment 1, by using a system consisting of the two members, the data provider 101 and the data user 102, as in a smart meter system, a HEMS and the like, privacy can be protected according to the needs of each individual while maintaining data usability.

The reasons are as follows. In other words, as shown by step S403 in Fig. 4, according to Embodiment 1, the disturbance parameter P_{Z}|_{Y} is calculated in accordance with the contents selected by the data provider 101. This disturbance parameter P_{Z}|_{Y} is "a conditional probability that minimizes the amount of mutual information between the information selected by the data provider 101 and the processed data, under the condition according to which the expected value of the distance between the unprocessed data and the processed data is set to be less than a predetermined value."

Therefore, by selecting the processed data according to such a conditional probability, the privacy information of the data provider 101 obtained from the processed data can be minimized while maintaining data usability.

In addition, Embodiment 1 provides the effect of enabling a variety of safe data analyses without causing concern for the data user 102 about privacy infringement, because the privacy information obtained from the processed data are minimized.

### Embodiment 2

Embodiment 1 discloses the technique of the system consisting of the two members: the data provider 101 and the data user 102. Embodiment 2 describes a technique concerning a system consisting of three or more members including a data intermediate user, the technique enabling the data intermediate user or data user to perform effective data analysis while protecting privacy information of a data provider contained in data.

Embodiment 2 describes particularly a technique to balance privacy protection with effective data analysis while fulfilling a constraint condition on data usability, if there is one.

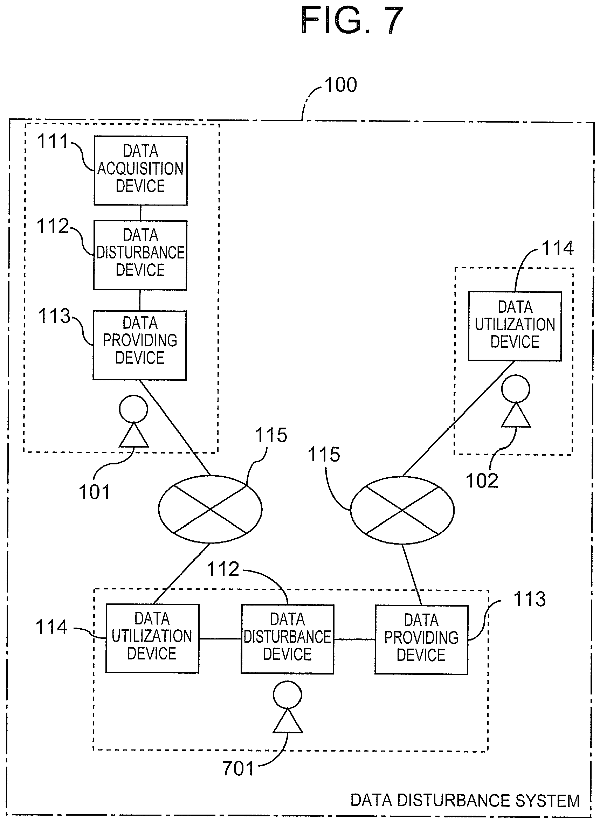

Fig. 7 is a block configuration diagram showing a data disturbance system according to Embodiment 2 of the present invention. Note that the same names and reference numerals are used to describe the components same as those shown in Fig. 1 of Embodiment 1; thus, descriptions thereof are omitted accordingly.

In Fig. 7, the component unique to Embodiment 2 is a data intermediate user 701. The data intermediate user 701 receives processed data from the data provider 101 and uses the processed data. If necessary, the data intermediate user 701 reprocesses the processed data and transmits the reprocessed data to the data user 102.

For example, in a smart meter system, the data intermediate user 701 serves as a demand response business operator who provides a demand response service to the data provider 101.

In some cases, a constraint condition different from that for the data user 102 is generated for the data intermediate user 701. For instance, a demand response business operator needs to have a correct understanding of a tight power condition. For this reason, there is set a constraint condition according to which high-power data of, for example, 500 watts or higher need to be used without being disturbed.

Therefore, unlike Embodiment 1, not all the power data of 0 watts to 1000 watts can be disturbed, allowing only the low-power data of 0 watts to 500 watts to be disturbed. In other words, the data intermediate user 701 can only partially protect the privacy of the data provider 101.

However, once the high-power data can be used, this constraint condition becomes no longer necessary. Therefore, when transmitting data from the data intermediate user 701 to the data user 102, reprocessing the high-power data of 500 watts or higher can allow the data user 102 to protect the privacy of the data provider 101.

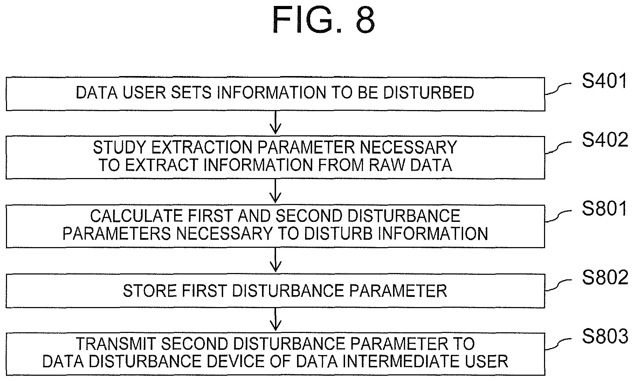

Operations of the data disturbance system having the foregoing configuration are described next. Specifically, the following describes, with reference to Fig. 8, a method for enabling the data provider 101 to set information to be disturbed out of items of information contained in raw data by using the data disturbance device 112.

Fig. 8 is a flowchart showing a procedure for enabling the data provider to set information to be disturbed out of items of information contained in raw data by using the data disturbance device of the data disturbance system according to Embodiment 2 of the present invention.

Step S401 and step S402 shown in Fig. 8 are the same as those shown in Fig. 4 of Embodiment 1; thus, descriptions thereof are omitted accordingly.

Subsequently, a first disturbance parameter and a second disturbance parameter necessary to disturb information are calculated (step S801). The first disturbance parameter is a parameter used to generate processed data by disturbing raw data using the data disturbance device 112 of the data provider 101. The second disturbance parameter is a parameter used to generate reproduced data by disturbing the processed data using the data disturbance device 112 of the data intermediate user 701.

As in step S403 shown in Fig. 4, specific calculation of these parameters is performed by solving a convex optimization problem. In Embodiment 2, however, the definition of "distance" is partially changed. In other words, instead of using a simple Euclidean distance as the distance between the unprocessed raw data Y and the processed data Z, a distorted Euclidean distance is used, as described hereinafter.

For the sake of simplicity of explanation, the following describes an assumption that there is set a constraint condition according to which high-power data of 500 watts or higher need to be used without being disturbed.

First, when calculating the first disturbance parameter, a Euclidean distance is used for the power data of less than 500 watts, distance 0 is used for the power data of 500 watts or higher when the raw data Y and the processed data Z share the same value, and an infinite distance is used in other cases.

When calculating the second disturbance parameter, on the other hand, a Euclidean distance is used for the power data of 500 watts or higher, distance 0 is used for the power data of less than 500 watts when the raw data Y and the processed data Z share the same value, and an infinite distance is used in other cases.

In step S801, a convex optimization problem is solved using these distorted Euclidean distances, to calculate the first disturbance parameter and the second disturbance parameter. Subsequently, the first disturbance parameter is stored (step S802).

Next, the second disturbance parameter is transmitted to the data disturbance device 112 of the data intermediate user 701 (step S803). In so doing, the data disturbance device 112 of the data intermediate user 701 receives and stores the second disturbance parameter.

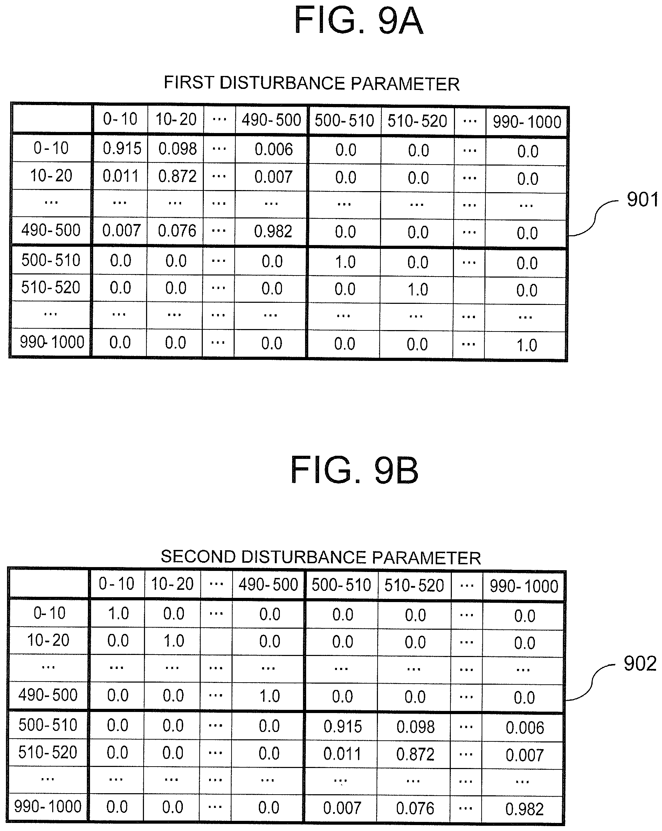

Fig. 9A is an explanatory diagram showing the first disturbance parameter obtained through the procedure shown in Fig. 8, and Fig. 9B is an explanatory diagram showing the second disturbance parameter obtained through the procedure shown in Fig. 8.

As shown in Figs. 9A and 9B, for the power data Y of 500 watts or higher, the first disturbance parameter 901 selects the same power data Z with the probability of 1. For the power data Y of less than 500 watts, the second disturbance parameter 902 selects the same power data Z with the probability of 1.

Therefore, as to the processed data generated by the data provider 101, the high-power data of 500 watts or higher are in the same state as the raw data. As to the reprocessed data generated by the data intermediate user 701, the low-power data of less than 500 watts are in the same state as the processed data.

This embodiment has described the example where the power range is divided by the 500 watts borderline into two ranges - low-power range and high-power range. However, those skilled in the art can understand that even when the power range is divided into three or more ranges, the disturbance parameters can be calculated in the same manner.

Those skilled in the art can also understand that even when the power range cannot be divided clearly, the disturbance parameters can be calculated by appropriately setting the distance function.

Note that the data disturbance method using the data disturbance device 112 of the data provider 101 and the data disturbance method using the data disturbance device 112 of the data intermediate user 701 are the same as the method shown in Fig. 6 of Embodiment 1; thus, descriptions thereof are omitted accordingly.

The operations of Embodiment 2 have been described above. According to Embodiment 2, in the system consisting of three or more members such as the data provider 101, the data intermediate user 701 and the data user 102 as in a demand response system or the like, privacy can be protected according to the needs of each individual while maintaining data usability.

Moreover, according to Embodiment 2, because the privacy information obtained from the processed data and the reprocessed data are minimized under the constraint condition, the effect of enabling a variety of safe data analyses can be exerted without causing concern for the data intermediate user 701 and the data user 102 about privacy infringement.

Embodiments 1 and 2 each takes power data for an example, but those skilled in the art can easily understand that the details of the present invention are not limited to power data and can be applied to various types of data.

Various types of data mentioned above include, for example, vital data such as blood pressure, blood flow and heart rate, base station information, movement history data of a GPS sensor and the like, a date/time of purchase of a product, purchase history data on the contents of the product, and the like. Application of the present invention to these types of data can realize protection of privacy according to the needs of each individual while maintaining data usability.

## Claims

1. A data disturbance device of a data provider (112), wherein the data disturbance device (112) is configured to be used in a system used by three or more members including the data provider (101), a data user (102) and a data intermediate user (701), wherein the data disturbance device (112) comprises:
a disturbance object setting unit (222) that calculates a disturbance parameter necessary to disturb information, which is set as information to be disturbed, out of items of information contained in acquired data; and
a data disturbance unit (224) that generates disturbed data by irreversibly converting the acquired data using the disturbance parameter,
wherein, when a predetermined constraint condition is provided to data usability, the disturbance object setting unit (222) calculates a plurality of disturbance parameters in accordance with the constraint condition,
wherein the plurality of disturbance parameters include a first disturbance parameter used to generate the disturbed data by disturbing the data using the data disturbance device (112) of the data provider (101) and a second disturbance parameter used to generate a re-disturbed data by re-disturbing the disturbed data using a data disturbance device (112) of the data intermediate user (701), wherein the data disturbance device of the data provider transmits the second disturbance parameter to the data disturbance device of the data intermediate user.

2. The data disturbance device (112) of claim 1,
wherein the disturbance parameter is a conditional probability obtained by solving a convex optimization problem.

3. The data disturbance device (112) of claim 2,
wherein the conditional probability minimizes an amount of mutual information between the information, which is set as information to be disturbed, and the disturbed data under a condition according to which an expected value of a distance between the acquired data prior to disturbance and the disturbed data is set to be less than a predetermined value.

4. A data disturbance system (100), comprising:
the data disturbance device of claim 1;
a first data utilization device (114) that uses data disturbed by the first data disturbance device (112);
the second data disturbance device (112) that re-disturbs data used by the first data utilization device (114); and
a second data utilization device (114) that utilizes data disturbed by the second disturbance device (112),
wherein the second data disturbance device (112) re-disturbs data using the second disturbance parameter calculated by the first data disturbance device (112).

## Patentansprüche

1. Datenstörungseinrichtung eines Datenanbieters (112), wobei die Datenstörungseinrichtung (112) eingerichtet ist, in einem System eingesetzt zu werden, das von drei oder mehr Mitgliedern genutzt wird, umfassend den Datenanbieter (101), einen Datennutzer (102) und einen Datenzwischennutzer (701), wobei die Datenstörungseinrichtung (112) umfasst:
eine Störungsobjektfestlegungseinheit (222), die einen Störungsparameter, der notwendig ist, um Informationen zu stören, die als zu störende Informationen festgelegt sind, aus den in erworbenen Daten enthaltenen Informationen berechnet; und
eine Datenstörungseinheit (224), die gestörte Daten erzeugt durch irreversibles Umwandeln der erworbenen Daten unter Verwendung des Störungsparameters,
wobei, wenn eine vorherbestimmte Randbedingung für die Datennutzbarkeit vorgesehen ist, die Störungsobjektfestlegungseinheit (222) eine Vielzahl von Störungsparametern gemäß der Randbedingung berechnet,
wobei die Vielzahl von Störungsparametern einen ersten Störungsparameter, der verwendet wird, die gestörten Daten zu erzeugen durch Stören der Daten unter Verwendung der Datenstörungseinrichtung (112) des Datenanbieters (101), und einen zweiten Störungsparameter, der verwendet wird, erneut gestörte Daten zu erzeugen durch erneutes Stören der gestörten Daten unter Verwendung einer Datenstörungseinrichtung (112) des Datenzwischennutzers (701), umfassen,
wobei die Datenstörungseinrichtung des Datenanbieters den zweiten Störungsparameter an die Datenstörungseinrichtung des Datenzwischennutzers überträgt.

2. Datenstörungseinrichtung (112) nach Anspruch 1, wobei der Störungsparameter eine bedingte Wahrscheinlichkeit ist, die durch Lösen eines konvexen Optimierungsproblems erhalten wird.

3. Datenstörungseinrichtung (112) nach Anspruch 2, wobei die bedingte Wahrscheinlichkeit eine Menge an wechselseitigen Informationen zwischen den Informationen, die als zu störende Information festgelegt sind, und den gestörten Daten minimiert unter einer Bedingung, gemäß der ein erwarteter Wert einer Distanz zwischen den erworbenen Daten vor der Störung und den gestörten Daten festgelegt ist, geringer zu sein als ein vorherbestimmter Wert.

4. Datenstörungssystem (100), umfassend:
die Datenstörungseinrichtung nach Anspruch 1;
eine erste Datennutzungseinrichtung (114), die Daten nutzt, die durch die erste Datenstörungseinrichtung (112) gestört wurden;
die zweite Datenstörungseinrichtung (112), die durch die erste Datennutzungseinrichtung (114) genutzte Daten erneut stört; und
eine zweite Datennutzungseinrichtung (114), die durch die zweite Störungseinrichtung (112) gestörte Daten nutzt,
wobei die zweite Datenstörungseinrichtung (112) Daten erneut stört unter Verwendung des durch die erste Datenstörungseinrichtung (112) berechneten zweiten Störungsparameters.

## Revendications

1. Dispositif de perturbation de données pour un fournisseur de données (112), le dispositif de perturbation de données (112) étant conçu pour être utilisé dans un système utilisé par trois membres ou plus comprenant le fournisseur de données (101), un utilisateur de données (102) et un utilisateur de données intermédiaire (701), le dispositif de perturbation de données (112) comprenant :
une unité de réglage d'objet de perturbation (222) qui calcule un paramètre de perturbation nécessaire pour perturber les informations, qui est réglé comme une information à perturber, parmi des éléments d'informations contenus dans les données acquises ; et
une unité de perturbation de données (224) qui génère des données perturbées en convertissant de manière irréversible les données acquises à l'aide du paramètre de perturbation,
moyennant quoi, lorsqu'une condition de contrainte prédéterminée est fournie à l'utilité des données, l'unité de réglage d'objet de perturbation (222) calcule une pluralité de paramètres de perturbation en fonction de la condition de contrainte,
la pluralité de paramètres de perturbation comprenant un premier paramètre de perturbation utilisé pour générer les données perturbées en perturbant les données à l'aide du dispositif de perturbation de données (112) du fournisseur de données (101) et un deuxième paramètre de perturbation utilisé pour générer les données redistribuées en perturbant à nouveau les données perturbées à l'aide d'un dispositif de perturbation de données (112) de l'utilisateur de données intermédiaire (701), le dispositif de perturbation de données du fournisseur de données transmettant le deuxième paramètre de perturbation au dispositif de perturbation de données de l'utilisateur de données intermédiaire.

2. Dispositif de perturbation de données (112) selon la revendication 1, dans lequel le paramètre de perturbation est une probabilité conditionnelle obtenue en résolvant un problème d'optimisation convexe.

3. Dispositif de perturbation de données (112) selon la revendication 2, dans lequel la probabilité conditionnelle minimise une quantité d'informations mutuelles entre les informations, qui est réglée en tant qu'informations à perturber, et les données perturbées, à une condition selon laquelle une valeur attendue d'une distance entre les données acquises avant la perturbation et les données perturbées est réglée de façon à être inférieure à une valeur prédéterminée.

4. Système de perturbation de données (100) comprenant :
le dispositif de perturbation de données selon la revendication 1 ;
un premier dispositif d'utilisation de données (114) qui utilise les données perturbées par le premier dispositif de perturbation de données (112) ;
un deuxième dispositif de perturbation de données (112) qui perturbe à nouveau les données utilisées par le premier dispositif d'utilisation de données (114) ; et
un deuxième dispositif d'utilisation de données (114) qui utilise les données perturbées par le deuxième dispositif de perturbation de données (112),
le deuxième dispositif de perturbation de données (112) perturbant à nouveau les données à l'aide du deuxième paramètre de perturbation calculé par le premier dispositif de perturbation de données (112).
